# EUROPÄISCHE PATENTSCHRIFT

(11) **EP 1 771 701 B1**
(45) Veröffentlichungstag und Bekanntmachung des Hinweises auf die Patenterteilung: **06.03.2013**
(21) Anmeldenummer: 05744807.8
(22) Anmeldetag: 25.05.2005
(51) Int. Cl.: G01B 7/012

(54) **SENSORMODUL FÜR EINEN TASTKOPF EINES TAKTILEN KOORDINATENMESSGERÄTES**
SENSOR MODULE FOR THE SCANNING HEAD OF A TACTILE CO-ORDINATE MEASURING DEVICE
MODULE DETECTEUR POUR TETE DE PALPEUR D'UN APPAREIL DE MESURE DE COORDONNEES TACTILES

(30) Priorität: 23.07.2004 DE 102004037490
(43) Veröffentlichungstag der Anmeldung: 11.04.2007
(73) Patentinhaber: Carl Zeiss Industrielle Messtechnik GmbH, 73447 Oberkochen (DE)
(72) Erfinder: SEITZ, Karl, 73447 Oberkochen (DE); STRAUSS, Wolfgang, 89195 Staig (DE); ROTH, Roland, 73550 Waldstetten (DE); DOMINICUS, Walter, 89551 Königsbronn (DE)
(74) Vertreter: Duhme, Torsten
(86) Internationale Anmeldenummer: PCT/EP2005/005622
(87) Internationale Veröffentlichungsnummer: WO 2006/010395

(56) Entgegenhaltungen:
- WO-A-2004/051181
- DE-A1- 10 108 774
- DE-U1- 9 320 596
- US-A- 4 451 988

## Beschreibung

Die vorliegende Erfindung betrifft ein Sensormodul für einen Tastkopf eines taktilen Koordinatenmessgerätes, mit einem Rahmen, der eine feststehende Modulbasis bildet und damit eine erste Messebene definiert, und mit einem relativ zum Rahmen beweglichen Teil, der dazu ausgebildet ist, das proximale Ende eines Taststiftes aufzunehmen, wobei der bewegliche Teil über zumindest zwei, vorzugsweise über vier, voneinander getrennte Stege an dem Rahmen gehalten ist, wobei der Rahmen und die Stege aus einem massiven Halbleitermaterial herausgeätzt sind.

Ein solches Sensormodul ist aus DE 101 08 774 A1 bekannt.

Gattungsgemäße Koordinatenmessgeräte werden unter anderem dazu verwendet, die Objektform eines Messobjekts mit großer Genauigkeit zu vermessen. Beispielsweise wird damit die Objektform von maschinell hergestellten Werkstücken im Rahmen der Qualitätskontrolle überprüft. Für den Messvorgang wird der Tastkopf des Koordinatenmessgerätes über eine geeignete Verschiebemechanik soweit an das Messobjekt herangefahren, bis der beweglich gelagerte Taststift einen gewünschten Messpunkt am Messobjekt berührt. Anschließend kann die Raumkoordinate des angetasteten Messpunktes aus der Stellung des Tastkopfes und ggf. zusätzlich aus der relativen Lage des Taststiftes zum Tastkopf bestimmt werden.

Die eingangs genannte DE 101 08 774 A1 offenbart einen Tastkopf, bei dem der Taststift an einem quer zur Längsachse des Taststiftes liegenden Querträger angeordnet ist. In einem Ausführungsbeispiel ist der Querträger als Sensormodul ausgebildet, d.h. der Taststift kann sich relativ zu einem feststehenden Teil des Querträgers bewegen und die jeweilige Auslenkung des Taststiftes relativ zum Querträger ist mit geeigneten Sensoren detektierbar. In diesem Ausführungsbeispiel besteht der Querträger aus einem feststehenden Rahmen mit quadratischer Grundfläche, in dessen Zentrum ein relativ zum Rahmen beweglicher Teil angeordnet ist. Dieses Teil wird in der Fachterminologie als "Boss" bezeichnet und trägt den Taststift. Der Boss ist in dem dargestellten Ausführungsbeispiel entweder über vier oder über acht Stege mit dem Rahmen verbunden. Bei einer Auslenkung des Taststiftes verwinden sich die Stege, was mit Hilfe von Dehnungssensoren ausgewertet werden kann. Rahmen, Stege und Boss sind in diesem Ausführungsbeispiel aus einem Siliziumvollkörper durch Ätzen hergestellt.

Das Grundkonzept eines solchen Sensormoduls für einen Tastkopf ist ferner aus einem Artikel von Kleine-Besten et al. mit dem Titel "Miniaturisierter 3D-Tastsensor für die Metrologie an Mikrostrukturen" bekannt, der in der DE-Zeitschrift "tm - Technisches Messen", Ausgabe 12/99, Seiten 490-495 erschienen ist. In diesem Artikel werden Untersuchungsergebnisse an einem solchen Sensormodul beschrieben, wobei der Boss des untersuchten Sensormoduls im Gegensatz zu der DE 101 08 774 A1 über eine Vollmembran an dem Rahmen gehalten ist. Die in DE 101 08 774 A1 offenbarte Halterung des Bosses mit Hilfe von einzelnen Stegen ist in einem Ausblick am Ende dieses Artikels erwähnt, um die Biegesteifigkeiten des Moduls in den drei Raumrichtungen aneinander anzugleichen. Die Untersuchung des Sensormoduls mit Vollmembran hat nämlich gezeigt, dass die Biegesteifigkeiten bei Auslenkungen des Taststiftes in einer Ebene parallel zum Rahmen (X- bzw. Y-Richtung) wesentlich geringer sind als bei einer Auslenkung senkrecht zum Rahmen (Z-Richtung).

Die Lagerung des Bosses bzw. des Taststiftes an dem Rahmen mit Hilfe von Stegen führt bereits zu einer Angleichung der Biegesteifigkeiten in den drei Raumrichtungen. Es bestehen jedoch weiterhin erhebliche Schwierigkeiten, wenn kontinuierlich abtastende Messvorgänge durchgeführt werden sollen, d.h. Messvorgänge, bei denen der Tastkopf in stetigem Kontakt mit einem Messobjekt geführt wird (auch als "Scannen" bezeichnet). Bei solchen komplexen Messvorgängen ist es trotz der bereits erreichten Angleichung der Biegesteifigkeiten immer noch äußerst problematisch, die jeweils exakte Auslenkung in Z-Richtung zu bestimmen.

US 4,451,988 offenbart einen Tastkopf, bei dem der Taststift über drei Y-artig angeordnete Stege mit einer Modulbasis verbunden ist. Die Stege werden von Federblechen gebildet, wobei jedes Federblech zwei parallele Schlitze besitzt, so dass sich in einer Draufsicht von oben eine mäanderartige Struktur ergibt. Jeder Steg besitzt folglich einen Bereich, der von den zwei Schlitzen begrenzt ist.

Vor diesem Hintergrund ist eine Aufgabe der vorliegenden Erfindung, ein Sensormodul der eingangs genannten Art so weiterzubilden, dass sich vor allem kontinuierliche Messvorgänge einfacher und vor allem genauer durchführen lassen.

Diese Aufgabe wird gemäß einem Aspekt der vorliegenden Erfindung durch ein Sensormodul der eingangs genannten Art gelöst, bei dem jeder Steg im Querschnitt senkrecht zur ersten Messebene einen materialstarken Stegbereich aufweist, der zwischen zwei materialschwachen Stegbereichen ausgebildet ist, wobei der materialstarke Stegbereich eine Materialdicke besitzt, die größer ist als eine entsprechende Materialdicke der materialschwachen Stegbereiche.

Alle bisherigen Ansätze in Bezug auf das gattungsgemäße Sensormodul zielten darauf ab, den Membranbereich zwischen dem Rahmen und dem beweglichen Teil ("Boss") im Querschnitt möglichst dünn zu gestalten, um eine möglichst große Flexibilität in Z-Richtung zu erhalten. Der vorliegende Ansatz weicht hiervon erstmals ab, indem die Stege mit einem materialstarken Bereich ausgebildet werden, d.h. mit einer Materialstärke, die das an sich technisch mögliche Minimum deutlich übersteigt. Praktische Versuche der Anmelderin haben jedoch gezeigt, dass es für die gewünschte Steifigkeit in Z-Richtung ausreichend ist, die zwei genannten materialschwachen Stegbereiche vorzusehen. Andererseits sorgt der materialstarke Stegbereich für eine höhere Torsions- bzw. Verwindungssteifigkeit in X- und Y-Richtung. Die Biegesteifigkeiten bei Antastungen in den drei Raumbereichen werden durch die neue Ausgestaltung der Stegbereiche daher deutlich besser aneinander angeglichen. Dadurch ist es einfacher, die Auslenkung des Taststiftes in Z-Richtung zuverlässig zu bestimmen, und zwar auch und vor allem bei kontinuierlich abtastenden Messvorgängen, bei denen der Taststift Auslenkungen in allen drei Raumrichtungen erfährt.

Aufgrund des deutlich besser angepassten Auslenkverhaltens in den drei Raumrichtungen ermöglicht das neue Sensormodul eine einfachere und genauere Durchführung von kontinuierlich abtastenden Messvorgängen. Die genannte Aufgabe ist daher vollständig gelöst.

In einer Ausgestaltung beträgt die Materialdicke der materialschwachen Stegbereiche höchstens 50% der Materialdicke des materialstarken Stegbereichs, vorzugsweise höchstens 30% und noch weiter bevorzugt etwa 3% bis 10%.

Generell kann man sagen, dass die Biegesteifigkeiten in Z-Richtung einerseits und in X/Y-Richtung andererseits um so besser aneinander angepasst sind, je dünner die materialschwachen Stegbereiche im Verhältnis zu dem materialstarken Stegbereich ausgebildet sind. Die angegebenen Größenordnungen berücksichtigen andererseits eine hinreichende Bruchsicherheit. Die zuverlässige Durchführung von kontinuierlich abtastenden Messvorgängen wird dadurch weiter verbessert.

In einer weiteren Ausgestaltung besitzen die Stege parallel zur ersten Messebene eine Stegbreite und eine Steglänge, wobei die Stegbreite zumindest ein Drittel, vorzugsweise etwa die Hälfte der Steglänge oder mehr beträgt.

Das genannte Verhältnis von Länge zu Breite der Stege verbessert die Torsionssteifigkeit und trägt damit zu einer weiteren Angleichung der Biegesteifigkeiten in X/Y-Richtung einerseits und Z-Richtung andererseits bei. Die Durchführung von kontinuierlich abtastenden Messvorgängen wird noch weiter verbessert.

In einer weiteren Ausgestaltung besitzen die materialschwachen Stegbereiche und der materialstarke Stegbereich in etwa dieselbe Stegbreite.

Alternativ hierzu wäre es grundsätzlich auch möglich, die materialschwachen Stegbereiche breiter oder weniger breit auszubilden als den materialstarken Stegbereich. Eine geringere Breite der materialschwachen Stegbereiche hätte jedoch eine Verringerung der Torsionssteifigkeit zur Folge, was im Hinblick auf die Angleichung der Biegesteifigkeiten von Nachteil wäre. Die bevorzugte Ausbildung der Stegbereiche mit etwa gleicher Stegbreite vermeidet diesen Nachteil und ist andererseits fertigungstechnisch einfach realisierbar. Darüber hinaus besitzt das neue Sensormodul in dieser Ausgestaltung trotz der ungleichen Materialstärken der Stegbereiche eine gute Robustheit für kontinuierlich abtastende Messungen.

In einer weiteren Ausgestaltung ist jeder materialschwache Stegbereich als Schlitz ausgebildet, der quer zum Steg verläuft, wobei dessen Schlitzbreite in Stegrichtung höchstens 20% der Länge des materialstarken Bereichs beträgt, vorzugsweise etwa 2% bis 10%.

Untersuchungen der Anmelderin haben gezeigt, dass die Angleichung der Biegesteifigkeiten um so besser ist, je kleiner die materialschwachen Stegbereiche in Bezug auf die Steglänge des materialstarken Bereichs sind. Die angegebenen Größenordnungen haben sich einerseits in Bezug auf die gewünschten Biegesteifigkeiten und andererseits in Bezug auf die Robustheit des Sensormoduls als besonders vorteilhaft ergeben.

In einer weiteren Ausgestaltung bilden die materialschwachen Stegbereiche Anschlussstellen des Steges an den Rahmen und an den beweglichen Teil.

Diese Ausgestaltung beruht auf der Erkenntnis, dass die gewünschte Angleichung der Biegesteifigkeiten in den drei Raumrichtungen um so besser ist, je weiter die materialschwachen Stegbereiche jedes Steges voneinander entfernt liegen. Die Ausbildung der materialschwachen Stegbereiche als Anschlussstellen des Steges an den Rahmen bzw. an den beweglichen Teil stellt die bevorzugte Ausgestaltung dar, weil der Abstand der materialschwachen Stegbereiche in dieser Ausgestaltung maximal ist.

In einer weiteren Ausgestaltung ist der bewegliche Teil in einer Ansicht senkrecht zur ersten Messebene kreuzförmig ausgebildet.

Diese Ausgestaltung ermöglicht einen robusten Anschluss der Stege an den beweglichen Teil ("Boss"), und zwar insbesondere im Hinblick darauf, dass die materialschwachen Stegbereiche von Haus aus bruchlastempfindlicher sind als materialstarke Stegbereiche. Die Kreuzform ermöglich stabile Übergänge im Bereich der Anschlussstellen. Bevorzugt ist die Ausbildung des beweglichen Teils in Form eines "Stummelkreuzes" mit sehr kurzen freien Enden. In dieser Ausgestaltung wird der Vorteil von maximal beabstandeten materialschwachen Stegbereichen mit der Stabilität des kreuzförmigen beweglichen Teils kombiniert.

In einer alternativen Ausgestaltung ist der bewegliche Teil hingegen in einer Ansicht senkrecht zur ersten Messebene quadratisch ausgebildet.

Diese Ausgestaltung führt zu einer fertigungstechnisch sehr einfachen Struktur mit maximalen Steglängen.

In einer weiteren Ausgestaltung weist der Rahmen im Querschnitt senkrecht zur ersten Messebene eine Materialdicke auf, die in etwa gleich der Materialdicke des materialstarken Stegbereichs ist.

Diese Ausgestaltung ist zum einen fertigungstechnisch einfach zu realisieren und sie trägt andererseits zu einer besonders guten Angleichung der Biegesteifigkeiten in den Raumrichtungen X/Y und Z bei. Besonders bevorzugt ist es, wenn der Rahmen und die materialstarken Stegbereiche in etwa die Dicke eines üblichen Siliziumwafers haben. Dann wird nämlich eine hohe Robustheit mit günstigen Herstellungskosten erreicht.

In einer weiteren Ausgestaltung besitzen der Rahmen und die Stege senkrecht zur ersten Messebene Seitenflanken, die nahezu senkrecht zur ersten Messebene verlaufen.

Diese Ausgestaltung ermöglicht es, die materialschwachen Stegbereiche in Längsrichtung der Stege sehr klein auszubilden. Damit kann die Biegesteifigkeit in den drei Raumrichtungen noch besser aneinander angepasst werden. Die exakte Durchführung einer kontinuierlich abtastenden Messung ist damit noch einfacher möglich.

In einer weiteren Ausgestaltung sind der Rahmen und die Stege mit Hilfe eines Trockenätzverfahrens aus dem massiven Halbleitermaterial herausgeätzt.

Diese Ausgestaltung besitzt den Vorteil, dass sich sehr klein bauende Sensormodule realisieren lassen, deren Biegesteifigkeiten in den drei Raumrichtungen sehr gut aneinander angepasst sind. Dies gilt insbesondere bei Verwendung eines Trockenätzverfahrens im Unterschied zu Nassätzverfahren, weil sich gezeigt hat, dass mit Trockenätzen wesentlich steilere Kantenverläufe und Konturen realisierbar sind. Die bevorzugte Ausgestaltung von nahezu senkrechten Seitenflanken ist daher mit einem Trockenätzverfahren besonders einfach und kostengünstig möglich.

In einer weiteren Ausgestaltung sind die Stege von dem Rahmen nur durch eine umlaufende Nut getrennt.

Mit anderen Worten ist das Sensormodul in dieser Ausgestaltung weitgehend als Vollkörper ausgebildet, aus dem die Stege und der bewegliche Teil durch Einbringen von relativ schmalen Schlitzen herausgearbeitet sind. Bevorzugt besitzt der Vollkörper dabei eine zumindest annähernd quadratische Grundfläche. Parallel zu den Längsseiten der Stege reichen die Schlitze durch den Vollkörper hindurch, um die Trennung von Steg und Rahmen zu erhalten. Demgegenüber reichen die Schlitze an den querseitigen Enden der Stege, d.h. an deren Anschlussstellen an den Rahmen und an den beweglichen Teil, nicht ganz bis auf den Grund des Vollkörpers, so dass hier die materialschwachen Stegbereiche verbleiben.

Diese Ausgestaltung ist aus derzeitiger Sicht besonders bevorzugt, weil sie zum einen eine sehr hohe Fertigungsgenauigkeit erlaubt. Es hat sich nämlich gezeigt, dass das für die vorliegenden Erfindung wichtige Tiefenprofil beim Herausätzen der materialschwachen Stegbereiche exakter realisiert werden kann, wenn nur relativ schmale Materialteile aus dem Vollkörper herausgeätzt werden. Darüber hinaus besitzt diese Ausgestaltung den Vorteil, dass der Rahmen relativ große feststehende Flächenbereiche aufweist, die besonders vorteilhaft für eine Beschriftung oder zum Aufbringen eines elektronischen Datenspeichers für Identifikations- und/oder Kalibrierdaten genutzt werden können. In einer weiteren Ausgestaltung beinhaltet das Sensormodul einen Taststift, der unlösbar an dem beweglichen Teil befestigt ist.

In dieser Ausgestaltung ist das Sensormodul ein "Wegwerfartikel", was eine grundlegende Abkehr von der bisherigen Umgangsweise mit Taststifteinheiten für Koordinatenmessgeräte ist. Während es bei allen bisherigen Betrachtungsweisen üblich war, die Tastkopfsensorik stationär auszubilden und allenfalls die verwendeten Taststifte auszutauschen, wird mit dieser Ausgestaltung erstmals der Weg beschritten, Taststift und Sensorik zu einem insgesamt austauschbaren Taststift-/Sensormodul auszubilden. Die Ausgestaltung besitzt den Vorteil, dass die Eigenschaften des Taststiftes bei der Dimensionierung der Biegesteifigkeiten optimal berücksichtigt werden können. Das Verhalten des neuen Sensormoduls ist damit noch besser auf die Durchführung von kontinuierlichen Messvorgängen abzustimmen.

In einer weiteren Ausgestaltung besitzt der Taststift eine Taststiftlänge, die etwa das Zwei- bis Sechsfache einer Steglänge beträgt.

Diese Ausgestaltung macht von den zuvor genannten Vorteilen Gebrauch, indem sie vor allem die Länge des Taststiftes in die Auslegung des Sensormoduls einbezieht. Die angegebene Größenordnung führt zu einer besonders hohen Eignung für die Durchführung von kontinuierlichen Messvorgängen.

In einer weiteren Ausgestaltung beinhaltet das Sensormodul eine Vielzahl von Sensorelementen, die im Bereich der Stege angeordnet sind, sowie einer Vielzahl von elektrischen Kontaktflächen zum Anschluss der Sensorelemente, die auf dem Rahmen angeordnet sind, und zwar vorzugsweise auf einer vom Taststift abgewandten Seite des Rahmens.

Auch diese Ausgestaltung trägt dazu bei, das neue Sensormodul zu einer vollständig integrierten Einheit zu machen, die als Ganzes an einem Tastkopf angeordnet wird. Die Positionierung der elektrischen Kontaktflächen auf der Rückseite des Rahmens ist dabei besonders bevorzugt, weil sich das Sensormodul damit sehr einfach auswechseln lässt. Unabhängig davon besitzt das Anordnen der Kontaktflächen am Rahmen den Vorteil, dass die Biegesteifigkeiten und damit das Messverhalten des Sensormoduls durch den Anschluss an den Tastkopf nicht beeinflusst wird. Damit lassen sich kontinuierliche Messungen auch nach Austausch des Sensormoduls ohne weiteres mit hoher Genauigkeit realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Koordinatenmessgerätes, in dem das neue Sensormodul zum Einsatz kommt,
- Fig. 2: die Draufsicht auf ein Ausführungsbeispiel des neuen Sensormoduls "von unten", d.h. von derjenigen Seite, an der der Taststift angeordnet ist,
- Fig. 3: das Sensormodul aus Fig. 2 in einem Querschnitt entlang der Linie III-III,
- Fig. 4: die Draufsicht auf die Rückseite (Oberseite) des Sensormoduls aus Fig. 2,
- Fig. 5: eine perspektivische Darstellung des Sensormoduls aus Fig. 2, jedoch ohne Taststift,
- Fig. 6: eine perspektivische Darstellung eines weiteren bevorzugten Ausführungsbeispiels des neuen Sensormoduls, und
- Fig. 7: das Sensormodul aus Fig. 6 in einer Ansicht von hinten.

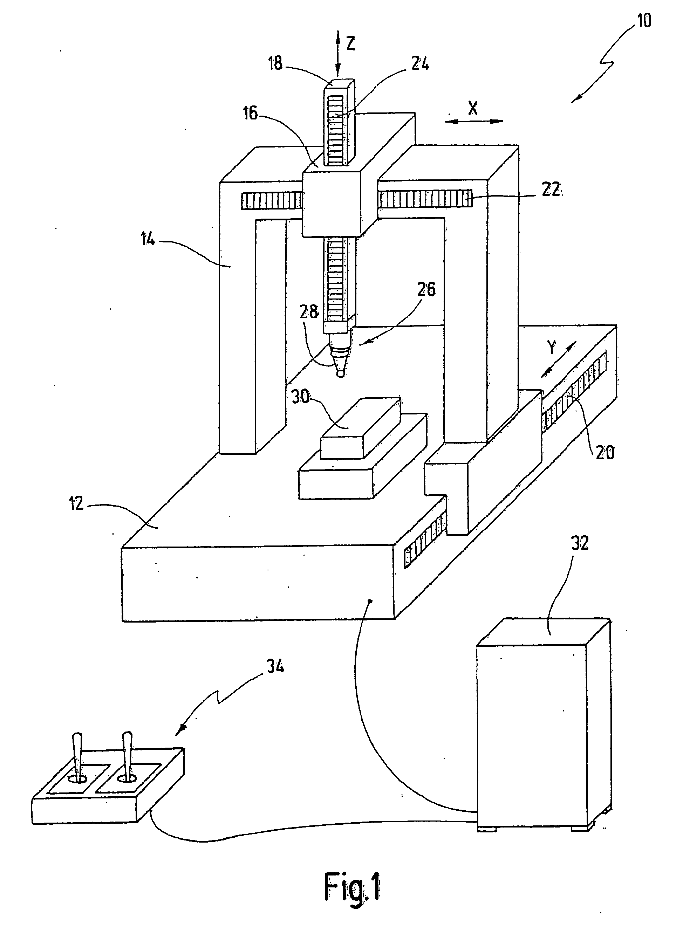

In Fig. 1 ist ein Koordinatenmessgerät in seiner Gesamtheit mit der Bezugsziffer 10 bezeichnet. Das Koordinatenmessgerät 10 ist hier in Portalbauweise dargestellt, die bei vielen Koordinatenmessgeräten üblich ist. Die vorliegende Erfindung ist jedoch nicht auf diese Bauweise beschränkt. Grundsätzlich kann das neue Sensormodul auch bei anderen Bauweisen verwendet werden, beispielweise bei Horizontalarmmessgeräten. Besonders bevorzugt ist es, das neue Sensormodul bei einem Koordinatenmessgerät einzusetzen, wie es in der nicht-vorveröffentlichten DE-Anmeldung mit dem Aktenzeichen 10 2004 020 996.0 beschrieben ist. Dieses bevorzugte Koordinatenmessgerät besitzt eine Verschiebemechanik für den Tastkopf, die von den üblichen Konstruktionen abweicht und in ihrem Grundprinzip in einer Dissertation von Marc Vermeulen mit dem Titel "High Precision 3D-Coordinate Measuring Machine", erhältlich unter der ISBN-Nummer 90-386-2631-2, beschrieben ist. Der Einfachheit halber wird für die nachfolgende Beschreibung jedoch auf das in Fig. 1 dargestellte Koordinatenmessgerät in Portalbauweise Bezug genommen, weil dessen Verschiebemechanik übersichtlicher und gewohnter ist.

Das Koordinatenmessgerät 10 besitzt eine Grundplatte 12, auf der ein Portal 14 in Längsrichtung verschieblich angeordnet ist. Diese Längsrichtung wird üblicherweise als Y-Achse bezeichnet. Am oberen Querträger des Portals 14 ist eine in X-Richtung verschieblicher Schlitten 16 angeordnet, der wiederum eine in Z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in drei Raumrichtungen X, Y, Z ablesen lässt. Die Skalen 20, 22, 24 können vom Grundsatz her einfache Messskalen sein, die von einem Bediener des Koordinatenmessgerätes 10 abgelesen werden. Bevorzugt handelt es sich hier jedoch um Wegmessgeber, die maschinell ausgelesen werden. Letzteres gilt insbesondere, wenn das Koordinatenmessgerät 10 mit dem neuen Sensormodul bestückt wird, da dieses extrem hohe Messgenauigkeiten ermöglicht.

Am unteren freien Ende der Pinole 18 ist in an sich bekannter Weise ein Tastkopf 26 angeordnet, der einen hier nicht massstabsgetreu dargestellten Taststift 28 trägt. Der Taststift 28 dient dazu, definierte Messpunkte eines Messobjekts 30 anzutasten. Das Messobjekt 30 ist dazu auf der Grundplatte 12 des Koordinatenmessgerätes 10 angeordnet. Aus der Stellung des Tastkopfes 26 im Messvolumen des Koordinatenmessgerätes 10 sowie der Auslenkung des Taststiftes 28 relativ zum Tastkopf kann die Raumkoordinate des angetasteten Messpunktes bestimmt werden.

Der Vollständigkeit halber ist das Koordinatenmessgerät 10 hier mit einer Auswerte- und Steuereinheit 32 dargestellt, über die der Messablauf gesteuert wird und die außerdem der Aufbereitung und Ausgabe der Messwerte dient. Optional kann außerdem ein Bedienpult 34 vorhanden sein, um die Bewegungen des Tastkopfes 26 auch manuell zu steuern.

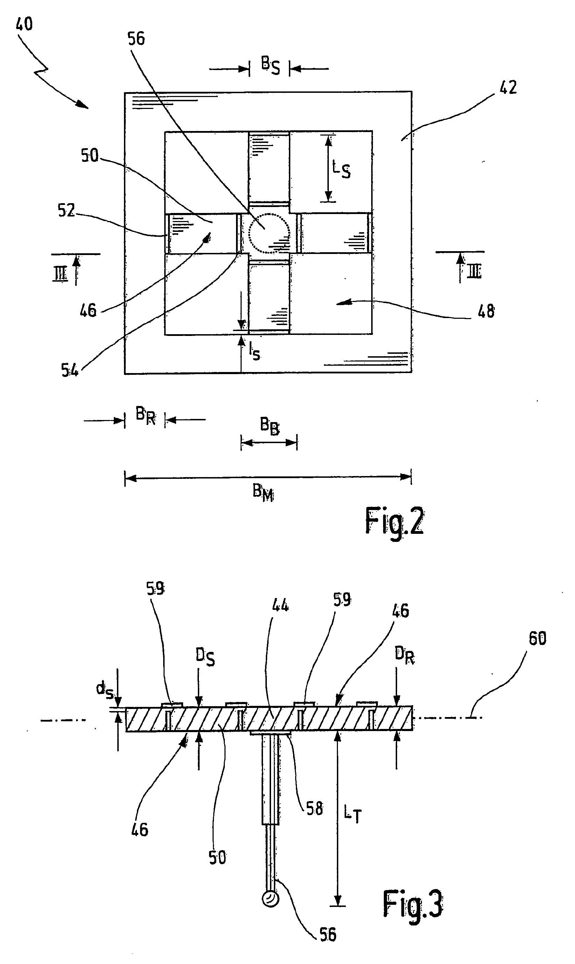

In den Figs. 2 bis 5 ist ein Ausführungsbeispiel des neuen Sensormoduls in seiner Gesamtheit mit der Bezugsziffer 40 bezeichnet. Das Sensormodul 40 besitzt einen Rahmen 42, der hier eine quadratische Grundform aufweist. Im Zentrum des Rahmens 42 ist ein beweglicher Teil 44 angeordnet, der sogenannte "Boss". Der bewegliche Teil 44 ist über vier Stege 46 mit dem Rahmen 42 verbunden. In dem bevorzugten Ausführungsbeispiel ist der bewegliche Teil (in Draufsicht) kreuzförmig ausgebildet, wobei die freien Arme des Kreuzes im Verhältnis zur Breite B_{S} der Stege 46 sehr kurz sind, d.h. es handelt sich hier um ein "Stummelkreuz". Die vier Stege 46 schließen bündig an die freien Arme des Stummelkreuzes an bzw. setzen diese fort und reichen bis zu jeweils einer der Innenseiten des Rahmens 42. Insgesamt besitzt das Sensormodul 40 damit eine quadratringförmige Grundstruktur (Rahmen 42), in deren Mitte eine Kreuzstruktur (beweglicher Teil 44 mit Stegen 46) symmetrisch eingepasst ist. Diejenigen Bereiche innerhalb des Rahmens 42, die weder beweglicher Teil 44 noch Steg 46 sind, sind durchgängig, d.h. es handelt sich hier um quadratische "Löcher" 48.

Jeder Steg 46 besitzt einen materialstarken, zentralen Bereich 50 sowie zwei Schlitze 52, 54, die die materialschwachen Bereiche im Sinne der vorliegenden Erfindung darstellen. Die Materialdicke des materialstarken Bereichs 50 ist in Fig. 3 mit D_{S} angegeben, die Materialdicke der materialschwachen Bereiche 52, 54 mit d_{S}. Die Materialdicke des Rahmens 42 ist hier mit D_{R} bezeichnet, und sie ist in diesem bevorzugten Ausführungsbeispiel gleich der Dicke D_{S} der materialstarken Bereiche 50.

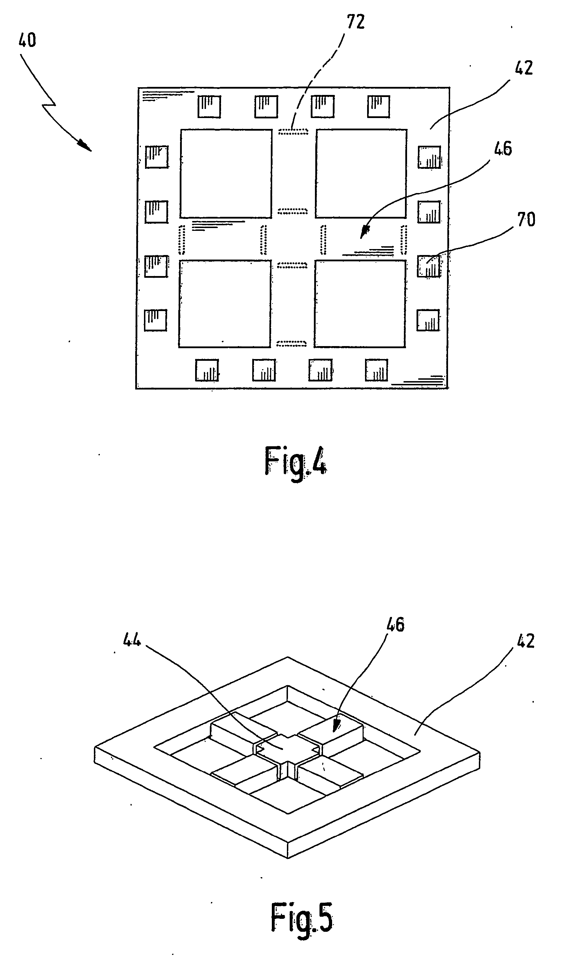

Der bewegliche Teil 44 trägt einen Taststift 56 (in Fig. 2 nur schematisch angedeutet, in Fig. 5 der Übersichtlichkeit halber nicht dargestellt), der im bevorzugten Ausführungsbeispiel unlösbar an dem beweglichen Teil 44 befestigt ist. In einem Ausführungsbeispiel ist der Taststift 56 mit einem proximalseitigen Endflansch 58 ausgebildet. Das freie Ende des Endflansches 58 ist auf den beweglichen Teil 44 aufgeklebt.

Bei der Bezugsziffer 59 sind in Fig. 3 Dehnungsmesssensoren schematisch dargestellt. In einem Ausführungsbeispiel handelt es sich um piezoresistive Elemente, die eine Dehnung, Stauchung und/oder Verwindung der Stege im Bereich der materialschwachen Bereiche erfassen, wie dies vom Grundsatz her schon aus der eingangs genannten DE 101 08 774 A1 bekannt ist.

Der Rahmen 42 wird in einen hier nicht dargestellten Halter an dem Tastkopf 26 fest eingespannt, wie dies beispielsweise in der schon erwähnten DE 101 08 774 A1 gezeigt ist. Damit definiert der Rahmen eine erste Bewegungs- bzw. Messebene, die in Fig. 3 bei der Bezugsziffer 60 angedeutet ist. Die Messebene 60 liegt in dem Koordinatenmessgerät 10 aus Fig. 1 parallel zu den Bewegungsachsen X und Y.

In einem bevorzugten Ausführungsbeispiel wird das Sensormodul 40 mit einem speziellen Tastkopfhalter (hier nicht gezeigt) zu einer baulichen Einheit verbunden, die als Ganzes an dem Tastkopf 26 des Koordinatenmessgerätes 10 befestigt wird. Ein bevorzugtes Ausführungsbeispiel für einen solchen Tastkopfhalter ist in der nicht-vorveröffentlichten PCT/EP03/14584 beschrieben. Die Kombination des Sensormoduls 40 mit einem solchen Tastkopfhalter ermöglicht eine automatisierte Auswechslung des Taststiftes und eine zuverlässige Kontaktierung der Dehnungsmesssensoren 59.

Die Länge L_{T} des verwendeten Taststiftes 56 liegt in dem gezeigten Ausführungsbeispielen zwischen etwa 3 mm und etwa 15 mm, bevorzugt liegt sie bei etwa 7 mm. Die Länge L_{S} der materialstarken Bereiche 50 beträgt in diesem Ausführungsbeispiel etwa 1,5 mm, die Länge lₛ jedes schlitzförmigen Bereichs 52, 54 etwa 0,05 mm bis etwa 0,1 mm. Die Breite B_{S} jedes Steges 46 beträgt in diesem Ausführungsbeispiel etwa 0,8 mm. Die Breite B_{B} des beweglichen Teils 44 beträgt im bevorzugten Ausführungsbeispiel etwa 1,3 mm. Die Breite B_{R} des Rahmens 42 liegt bei etwa 1 mm, die Gesamtbreite B_{M} des Sensormoduls 40 bei etwa 6,5 mm bis etwa 7 mm.

Die Materialstärke D_{S} der materialstarken Stegbereiche 50 beträgt hier etwa 0,45 mm, die Materialstärke dₛ der materialschwachen Bereiche 52, 54 liegt hier bei etwa 0,025 mm.

Das Sensormodul 40 mit diesen Abmessungen wurde in einem Ausführungsbeispiel aus einem monokristalinien Silizium-Wafermaterial durch einen Trockenätzprozess hergestellt. Mit den genannten Abmessungen ließ sich dann eine Biegesteifigkeit erreichen, die in Z-Richtung bis in etwa auf den Faktor 3 an die Biegesteifigkeit in X- bzw. Y-Richtung heranreichte.

In der Rückansicht des Sensormoduls in Fig. 4 sind die bevorzugten Kontaktflächen 70 gezeigt. In diesem Ausführungsbeispiel sind jeweils vier Kontaktflächen 70 nebeneinander auf jedem Schenkel des Rahmens 42 angeordnet. Insgesamt besitzt der Rahmen 42 damit 16 Kontaktflächen 70, an denen die Dehnungsmesssensoren 59 beim Einsetzen des Sensormoduls 40 in den Tastkopfhalter kontaktiert werden. Die Anordnung der Kontaktflächen 70 auf der Rückseite des Rahmens 42 bietet dabei die Möglichkeit, die Kontaktierung durch federbelastete Taststifte herzustellen, die von oben (bzw. von hinten) auf den Rahmen 42 drücken.

Das neue Sensormodul wurde hier mit vier Stegen 46 dargestellt, was dem derzeit bevorzugten Ausführungsbeispiel der Anmelderin entspricht. Grundsätzlich kann die vorliegende Erfindung jedoch auch bei Sensormodulen angewendet werden, die eine abweichende Anzahl an Stegen besitzen. So kann die Verwendung von materialstarken und materialschwachen Stegbereichen beispielsweise auch bei einer "Hosenträgerstruktur" mit acht Stegen angewendet werden, wie sie aus der schon eingangs genannten DE 101 08 774 A1 bekannt ist. Des weiteren könnte das neue Sensormodul grundsätzlich auch mit einer geringeren und/oder ungeraden Anzahl an Stegen (zumindest zwei) realisiert werden, beispielsweise mit drei oder fünf Stegen. Außerdem kann die erfindungsgemäße Verwendung von materialschwachen und materialstarken Stegbereichen grundsätzlich auch bei nur zwei Stegen 46 Anwendung finden, wenngleich dies aus Stabilitätsgründen derzeit nicht bevorzugt ist.

In einem weiteren Ausführungsbeispiel können die materialschwachen Stegbereiche 52, 54 noch mit einer Ausnehmung 72 versehen sein, die in punktierter Linie in Fig. 4 angedeutet ist. Jeder Steg 46 ist dann im Bereich seiner Anschlussstellen nur noch über jeweils zwei "punktförmige" Verbindungsstellen mit dem Rahmen 42 bzw. dem beweglichen Teil 44 verbunden. In dem beschriebenen Ausführungsbeispiel besitzen der Rahmen 42 und die Stege 46 jeweils Seitenflanken, die nahezu senkrecht zur ersten Messebene 60 verlaufen. Abweichend hiervon ist es jedoch grundsätzlich auch möglich, die Seitenflanken mit einem schrägen Verlauf auszubilden, was insbesondere die Verwendung eines Nassätzverfahrens beim Herstellen des neuen Sensormoduls ermöglicht. Des weiteren können die Stege 46 abweichend von dem gezeigten Ausführungsbeispiel eine in der Draufsicht trapezförmige Fläche besitzen, wobei die breitere Seite jedes Trapezes dann am Rahmen 42 angeordnet ist, während die schmalere Trapezseite an dem beweglichen Teil 44 sitzt.

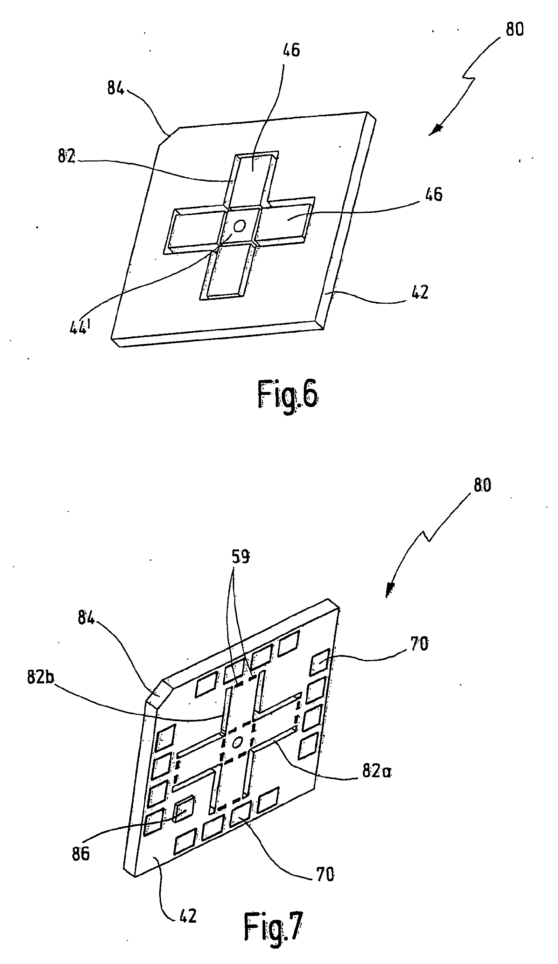

Fig. 6 und 7 zeigen ein weiteres bevorzugtes Ausführungsbeispiel des neuen Sensormoduls (ohne Taststift dargestellt), das in seiner Gesamtheit mit der Bezugsziffer 80 bezeichnet ist. Im übrigen bezeichnen gleiche Bezugszeichen dieselben Elemente wie zuvor.

Das Sensormodul 80 besitzt einen Rahmen 42, der nur durch eine Nut 82 von den Stegen getrennt ist. Im Unterschied zu dem vorhergehenden Ausführungsbeispielen besitzt das Sensormodul 80 also keine großflächigen Ausnehmungen oder Öffnungen zwischen den Stegen und dem Rahmen. In der Draufsicht in Fig. 6 sieht man, dass die Nut 82 eine passgenau um die Stege 46 herumlaufende Nut ist. Die Breite der Nut beträgt in einem Ausführungsbeispiel 0,1 mm. Von der in Fig. 7 gezeigten Rückseite her erscheint die Nut 82 dagegen in vier winkelförmigen Teilstücken, von denen hier zwei mit 82a und 82b bezeichnet sind. Jedes Teilstück 82a, 82b besitzt zwei rechtwinkelig zueinander angeordnete, gleichlange Schenkel. Die im Vergleich zu der umlaufenden Nut auf der Vorderseite "fehlenden" Teilstücke der Nut 82 sind die materialschwachen Stegbereiche 52, 54.

Mit anderen Worten ist das Sensormodul in diesem Fall weitgehend als Vollkörper erhalten. Die Stege und der bewegliche Teile sind durch Einbringen von schmalen Schlitzen herausgearbeitet.

Das Sensormodul 82 besitzt eine quadratische Grundfläche, wobei eine der Ecken des Quadrats (bei Bezugsziffer 84) abgeschrägt ist. Die Ecke 84 bildet dadurch eine Orientierungsmarke, die dafür sorgt, dass das Sensormodul 80 stets in gleicher, definierter Einbaulage an dem Koordinatenmessgerät 10 befestigt wird. Dadurch wird eine gleichbleibend hohe Genauigkeit auch nach einem Wechsel des Sensormoduls erreicht.

Mit der Bezugsziffer 59 (Fig. 7) sind stellvertretend für die weiteren Positionen zwei piezoresistive Widerstande bezeichnet. Jeweils vier solcher Widerstände sind hier an einem Steg angeordnet und in einer Brückenschaltung verschaltet. Es kann jedoch auch eine geringere oder höhere Anzahl derartiger Widerstände an jedem Steg vorgesehen sein. Die Widerstände fungieren als Sensoren, mit deren Hilfe sich die Auslenkungen des hier nicht dargestellten Taststiftes bestimmen lassen. Wie in Fig. 7 gezeigt, sind jeweils zwei Widerstände auf der Rückseite jedes materialschwachen Stegbereichs 52, 54 angeordnet, was sich als eine besonders günstige Ausgestaltung erwiesen hat.

Mit der Bezugsziffer 86 ist ferner ein Chip bezeichnet, der auf der Rückseite des Rahmens 42 auf einer der "freien" Rahmenflächen angeordnet ist. Im bevorzugten Ausführungsbeispiel ist der Chip ein integrierter ID-Schaltkreis, mit dessen Hilfe sich jedes einzelne Sensormodul 80 eindeutig identifizieren lässt. Beispielsweise enthält der Chip 86 also eine individuelle Kennung, die es ermöglicht, jedem Sensormodul 80 eigens zugeordnete Kalibrierdaten zuzuweisen. Diese können beispielsweise in der Steuerung 32 des Koordinatenmessgerätes 10 hinterlegt sein und anhand der Chipkennung abgerufen werden, sobald das Sensormodul in das Koordinatenmessgerät eingesetzt wurde. Alternativ oder ergänzend hierzu können auch modulspezifische Daten in dem Chip 86 direkt hinterlegt sein.

## Patentansprüche

1. Sensormodul für einen Tastkopf eines taktilen Koordinatenmessgerätes, mit einem Rahmen (42), der eine feststehende Modulbasis bildet und damit eine erste Messebene (60) definiert, und mit einem relativ zum Rahmen (42) beweglichen Teil (44), der dazu ausgebildet ist, das proximale Ende (58) eines Taststiftes (56) aufzunehmen, wobei der bewegliche Teil (44) über zumindest zwei, vorzugsweise über vier, voneinander getrennte Stege (46) an dem Rahmen (42) gehalten ist, wobei der Rahmen (42) und die Stege (46) aus einem massiven Halbleitermaterial herausgeätzt sind, wobei jeder Steg (46) im Querschnitt senkrecht zur ersten Messebene (60) einen materialstarken Stegbereich (50) aufweist, der zwischen zwei materialschwachen Stegbereichen (52, 54) ausgebildet ist, und wobei der materialstarke Stegbereich (50) eine Materialdicke (D_{S}) besitzt, die größer ist als eine entsprechende Materialdicke (d_{S}) der materialschwachen Stegbereiche (52, 54).

2. Sensormodul nach Anspruch 1, **dadurch gekennzeichnet, dass** die Materialdicke (d_{S}) der materialschwachen Stegbereiche (52, 54) höchstens 50% der Materialdicke (D_{S}) des materialstarken Stegbereichs (50) beträgt, vorzugsweise höchstens 30% und noch weiter bevorzugt etwa 3% bis 10%.

3. Sensormodul nach Anspruch 1 oder 2, **dadurch gekennzeichnet, dass** die Stege (46) parallel zur ersten Messebene (60) eine Stegbreite (B_{S}) und eine Steglänge (L_{S}) besitzen, wobei die Stegbreite (B_{S}) zumindest ein Drittel, vorzugsweise etwa die Hälfte der Steglänge (L_{S}) oder mehr beträgt.

4. Sensormodul nach einem der Ansprüche 1 bis 3, **dadurch gekennzeichnet, dass** die materialschwachen Stegbereiche (52, 54) und der materialstarke Stegbereich (50) in etwa dieselbe Stegbreite (B_{S}) besitzen.

5. Sensormodul nach einem der Ansprüche 1 bis 4, **dadurch gekennzeichnet, dass** jeder materialschwache Stegbereich (52, 54) als Schlitz ausgebildet ist, der quer zum Steg (46) verläuft und dessen Schlitzbreite (l_{S}) in Stegrichtung höchstens 20 % der Länge (L_{S}) des materialstarken Bereichs (50) beträgt, vorzugsweise etwa 2% bis 10%.

6. Sensormodul nach einem der Ansprüche 1 bis 5, **dadurch gekennzeichnet, dass** die materialschwachen Stegbereiche (52, 54) Anschlussstellen des Steges (46) an den Rahmen (42) und an den beweglichen Teil (44) bilden.

7. Sensormodul nach einem der Ansprüche 1 bis 6, **dadurch gekennzeichnet, dass** der bewegliche Teil (44) in einer Ansicht senkrecht zur ersten Messebene (60) kreuzförmig ausgebildet ist.

8. Sensormodul nach einem der Ansprüche 1 bis 6, **dadurch gekennzeichnet, dass** der bewegliche Teil (44') in einer Ansicht senkrecht zur ersten Messebene (60) quadratisch ausgebildet ist.

9. Sensormodul nach einem der Ansprüche 1 bis 8, **dadurch gekennzeichnet, dass** der Rahmen (42) im Querschnitt senkrecht zur ersten Messebene (60) eine Materialdicke (D_{R}) aufweist, die in etwa gleich der Materialdicke (D_{S}) des materialstarken Stegbereichs (50) ist.

10. Sensormodul nach einem der Ansprüche 1 bis 9, **dadurch gekennzeichnet, dass** der Rahmen (42) und die Stege (46) senkrecht zur ersten Messebene (60) Seitenflanken besitzen, die nahezu senkrecht zur ersten Messebene (60) verlaufen.

11. Sensormodul nach einem der Ansprüche 1 bis 10, **dadurch gekennzeichnet, dass** der Rahmen (42) und die Stege (46) mit Hilfe eines Trockenätzverfahrens aus dem massiven Halbleitermaterial herausgeätzt sind.

12. Sensormodul nach einem der Ansprüche 1 bis 11, **dadurch gekennzeichnet, dass** die Stege (46) von dem Rahmen (42) nur durch eine umlaufende Nut (82) getrennt sind.

13. Sensormodul nach einem der Ansprüche 1 bis 12, **gekennzeichnet durch** einen Taststift (56), der unlösbar an dem beweglichen Teil (44) befestigt ist.

14. Sensormodul nach Anspruch 13, **dadurch gekennzeichnet, dass** der Taststift (56) eine Taststiftlänge (L_{T}) besitzt, die zumindest das Zwei- bis Sechsfache einer Steglänge (L_{S}) beträgt.

15. Sensormodul nach einem der Ansprüche 1 bis 14, **gekennzeichnet durch** eine Vielzahl von Sensorelementen, die im Bereich der Stege angeordnet sind, sowie eine Vielzahl von elektrischen Kontaktflächen (70) zum Anschluss der Sensorelemente, die auf dem Rahmen (42) angeordnet sind, und zwar vorzugsweise auf einer vom Taststift abgewandten Seite des Rahmens (42).

## Claims

1. A sensor module for a probe head of a tactile coordinate measuring machine, comprising a frame (42) which forms a stationary module base and thereby defines a first measurement plane (60), and comprising a part (44) configured to move relative to the frame (42) and configured to hold the proximal end (58) of a stylus (56), wherein the moving part (44) is held on the frame (42) via at least two, and preferably via four, webs (46) which are separated from one another, wherein the frame (42) and the webs (46) are etched out of a solid semiconductor material, wherein the cross section of each web (46) has a thick-material web portion (50) arranged between two thin-material web portions (52, 54) in a cross section perpendicularly to the first measurement plane (60), and wherein the thick-material web portion (50) has a material thickness (Ds) which is greater than the corresponding material thickness (d_{S}) of the thin-material web portions (52, 54).

2. The sensor module of claim 1, **characterized in that** the material thickness (d_{S}) of the thin-material web portions (52, 54) is at most 50% of the material thickness (Ds) of the thick-material web portion (50), preferably at most 30%, and even more preferably about 3% to 10%.

3. The sensor module of claim 1 or 2, **characterized in that** the webs (46) have a web width (B_{S}) and a web length (L_{S}) parallel to the first measurement plane (60), wherein the web width (Bs) is at least one third and preferably about half of the web length (Ls), or more.

4. The sensor module of one of claims 1 to 3, **characterized in that** the thin-material web portions (52, 54) and the thick-material web portion (50) have approximately the same web width (Bs).

5. The sensor module of one of claims 1 to 4, **characterized in that** the thin-material web portions (52, 54) are formed as slots extending transversely with respect to the web (46), wherein each slot has a slot width (l_{S}) in the direction of the web, which width is at most 20% of the length (Ls) of the thick-material area (50), preferably about 2% to 10%.

6. The sensor module of one of claims 1 to 5, **characterized in that** the thin-material web portions (52, 54) form connection points of the web (46) to the frame (42) and to the moving part (44).

7. The sensor module of one of claims 1 to 6, **characterized in that** the moving part (44) has a cruciform shape in a view perpendicularly to the first measurement plane (60).

8. The sensor module of one of claims 1 to 6, **characterized in that** the moving part (44') is square in a view perpendicularly to the first measurement plane (60).

9. The sensor module of one of claims 1 to 8, **characterized in that** the frame (42) has a material thickness (D_{R}) which is approximately the same as the material thickness (Ds) of the thick-material web portion (50) in a cross section perpendicularly to the first measurement plane (60).

10. The sensor module of one of claims 1 to 9, **characterized in that** the frame (42) and the webs (46) have side flanks, which run substantially perpendicularly to the first measurement plane (60).

11. The sensor module of one of claims 1 to 10, **characterized in that** the frame (42) and the webs (46) are etched out of the solid semiconductor material by means of a dry-etching method.

12. The sensor module of one of claims 1 to 11, **characterized in that** the webs (46) are separated from the frame (42) only by a circumferential groove (82).

13. The sensor module of one of claims 1 to 12, **characterized by** a stylus (56) which is attached to the moving part (44) in a non-removable manner.

14. The sensor module of claim 13, **characterized in that** the stylus (56) has a stylus length (L_{T}) which is at least twice to six times the web length (Ls).

15. The sensor module of one of claims 1 to 14, **characterized by** a plurality of sensor elements arranged in the area of the webs, and a plurality of electrical contact surfaces (70) for connecting the sensor elements, the contact surfaces being arranged on the frame (42), and preferably on a side of the frame (42) facing away from the stylus.

## Revendications

1. Module de détection pour tête de palpage d'un appareil tactile de mesures de coordonnées, le module présentant :
un bâti (42) qui forme une base fixe du module et définit ainsi un premier plan de mesure (60) et
une partie (44) mobile par rapport au bâti (42) et configurée pour reprendre l'extrémité proximale (58) d'une tige de palpage (56),
la partie mobile (44) étant maintenue sur le bâti (42) par au moins deux et de préférence quatre nervures (46) séparées les unes des autres,
le bâti (42) et les nervures (46) étant formés par gravure d'un matériau semiconducteur massif,
chaque nervure (46) présentant en coupe transversale perpendiculaire au premier plan de mesure (60) une partie épaisse (50) du matériau de nervure formée entre deux parties minces (52, 54) du matériau de nervure,
la partie épaisse (50) du matériau de nervure présentant une épaisseur (Ds) supérieure à une épaisseur correspondante (ds) des parties minces (52, 54) du matériau de nervure.

2. Module de détection selon la revendication 1, **caractérisé en ce que** l'épaisseur correspondante (ds) des parties minces (52, 54) du matériau de nervure représente au plus 50 %, de préférence au plus 30 % et de manière encore plus préférable au plus environ 3 % à 10 % de l'épaisseur (Ds) de la partie épaisse (50) du matériau de nervure.

3. Module de détection selon la revendication 1 ou 2, **caractérisé en ce que** les nervures (46) présentent parallèlement au premier plan de mesure (60) une largeur (Bs) et une longueur (Ls), la largeur (Bs) représentant au moins un tiers et de préférence environ la moitié de la longueur (Ls) des nervures, ou davantage.

4. Module de détection selon l'une des revendications 1 à 3, **caractérisé en ce que** les parties minces (52, 54) du matériau de nervure et la partie épaisse (50) du matériau de nervure possèdent sensiblement la même largeur (Bs).

5. Module de détection selon l'une des revendications 1 à 4, **caractérisé en ce que** chaque partie mince (52, 54) du matériau de nervure est configurée comme fente qui s'étend transversalement par rapport à la nervure (46) et dont la largeur (ls) représente dans la direction de la nervure au plus 20 % de la longueur (Ls) de la partie épaisse (50) du matériau et de préférence environ 2 % à 10 % de cette longueur.

6. Module de détection selon l'une des revendications 1 à 5, **caractérisé en ce que** les parties minces (52, 54) du matériau de nervure forment des emplacements de raccordement de la nervure (46) au bâti (42) et à la partie mobile (44).

7. Module de détection selon l'une des revendications 1 à 6, **caractérisé en ce que** la partie mobile (44) est configurée en croix dans une vue perpendiculaire au premier plan de mesure (60).

8. Module de détection selon l'une des revendications 1 à 6, **caractérisé en ce que** la partie mobile (44') est configurée en carré dans une vue perpendiculaire au premier plan de mesure (60).

9. Module de détection selon l'une des revendications 1 à 8, **caractérisé en ce que** le bâti (42) présente dans une section transversale perpendiculaire au premier plan de mesure (60) une épaisseur (DR) de matériau sensiblement égale à l'épaisseur (Ds) de matériau de la partie épaisse (50) du matériau de nervure.

10. Module de détection selon l'une des revendications 1 à 9, **caractérisé en ce que** le bâti (42) et les nervures (46) possèdent perpendiculairement au premier plan de mesure (60) des flancs latéraux qui s'étendent sensiblement à la perpendiculaire du premier plan de mesure (60).

11. Module de détection selon l'une des revendications 1 à 10, **caractérisé en ce que** le bâti (42) et les nervures (46) sont formées par gravure du matériau semiconducteur massif à l'aide d'une opération de gravure à sec.

12. Module de détection selon l'une des revendications 1 à 11, **caractérisé en ce que** les nervures (46) sont séparées du bâti (42) uniquement par une rainure périphérique (82).

13. Module de détection selon l'une des revendications 1 à 12, **caractérisé par** une tige de palpage (56) fixée de manière non libérable à la partie mobile (44).

14. Module de détection selon la revendication 13, **caractérisé en ce que** la tige de palpage (56) présente une longueur (LT) qui représente au moins de deux à six fois la longueur (Ls) de la nervure.

15. Module de détection selon l'une des revendications 1 à 14, **caractérisé par** plusieurs éléments de détection disposés au niveau des nervures, ainsi que plusieurs surfaces (70) de contact électrique qui raccordent les éléments de détection et qui sont disposées sur le bâti (42), et ce de préférence sur un côté du bâti (42) non tourné vers la tige de palpage.
